# EUROPÄISCHE PATENTSCHRIFT

(11) **EP 2 412 089 B1**
(45) Veröffentlichungstag und Bekanntmachung des Hinweises auf die Patenterteilung: **20.03.2013**
(21) Anmeldenummer: 10705347.2
(22) Anmeldetag: 23.02.2010
(51) Int. Cl.: H02P 6/00, H02P 6/18, H02P 6/20, H02P 6/22, H02P 25/02

(54) **VERFAHREN UND VERSTÄRKER ZUM BETREIBEN EINES SYNCHRONMOTORS**
METHOD AND AMPLIFIER FOR OPERATING A SYNCHRONOUS MOTOR
PROCÉDÉ ET AMPLIFICATEUR POUR LE FONCTIONNEMENT D'UN MOTEUR SYNCHRONE

(30) Priorität: 27.03.2009 DE 102009001955
(43) Veröffentlichungstag der Anmeldung: 01.02.2012
(73) Patentinhaber: Beckhoff Automation GmbH, 33415 Verl (DE)
(72) Erfinder: SIEWEKE, Frank, 33818 Leopoldshöhe (DE)
(74) Vertreter: Rüdig, Alexander
(86) Internationale Anmeldenummer: PCT/EP2010/052270
(87) Internationale Veröffentlichungsnummer: WO 2010/108741

(56) Entgegenhaltungen:
- EP-A2- 0 517 393
- DE-A1- 19 637 161
- US-A- 4 814 677
- US-A- 5 537 020

## Beschreibung

Die vorliegende Erfindung betrifft ein Verfahren zum Betreiben eines Synchronmotors, welcher ein erstes Motorteil und ein zweites Motorteil aufweist, wobei das erste und zweite Motorteil relativ zueinander bewegbar sind. Die Erfindung betrifft des Weiteren einen Verstärker zum Betreiben eines solchen Synchronmotors, sowie ein System mit einem Verstärker und einem Synchronmotor.

Synchronmotoren mit einem ersten und einem zweiten Motorteil, welche relativ zueinander bewegbar ausgebildet sind, sind in unterschiedlichen Ausführungsformen bekannt. In einer rotatorischen Ausführungsform kann eines der Motorteile in Bezug auf das andere Motorteil rotiert werden. Bei einem sogenannten Linearantrieb bzw. Linearmotor können erstes oder zweites Motorteil in einer geradlinigen Bewegung (Translationsbewegung) zueinander versetzt werden.

Das Hervorrufen einer Bewegung basiert bei all diesen unterschiedlichen Ausführungsformen auf einer Wechselwirkung von Magnetfeldern. Hierbei wird mit dem ersten Motorteil mit Hilfe von Elektromagneten (stromdurchflossene Leiter bzw. Spulen) ein sich rotatorisch oder translatorisch bewegendes Magnetfeld (Drehfeld bzw. Wanderfeld) erzeugt. Das zweite Motorteil weist einen oder mehrere Permanentmagneten auf, so dass ein in Bezug auf das zweite Motorteil statisches Magnetfeld vorliegt. Das Magnetfeld des ersten Motorteils interagiert mit dem statischen Feld des zweiten Motorteils, so dass das erste und zweite Motorteil relativ zueinander bewegt werden.

Zur Erzeugung eines sich bewegenden Magnetfelds werden die Elektromagneten des ersten Motorteils zeitlich versetzt zueinander angesteuert bzw. mit einem Strom beaufschlagt. Dieser Stromübergang von einem zum nächsten Elektromagneten wird auch als Kommutierung bezeichnet. Für eine effektive Betriebsweise eines Synchronmotors ist es erforderlich, den Zeitpunkt der Kommutierung mit dem Magnetfeld des zweiten Motorteils zu harmonisieren.

Bei einer mechanischen Kommutierung werden Schleifkontakte (üblicherweise in Form von Bürsten) in einer vorgegebenen geometrischen Anordnung eingesetzt, so dass bei einer Relativbewegung von erstem und zweitem Motorteil der Stromfluss entsprechend umgeschaltet wird. Auf diese Weise kann die Kommutierung zwar mit einem relativ geringen Aufwand verwirklicht werden. Nachteilig sind jedoch ein im Betrieb auftretender Verschleiß der Bürsten bzw. ein Bürstenverlust, sowie unerwünschte Effekte wie zum Beispiel eine übermäßige Funkenbildung. Moderne Synchronmotoren werden daher üblicherweise mit einer elektronischen Kommutierung betrieben. Zu diesem Zweck sind den Motoren elektronische Steuer- bzw. Regelvorrichtungen, auch als Servoverstärker bezeichnet, zugeordnet, um das für den Motorenlauf erforderliche Drehfeld verschleißfrei und reibungslos erzeugen zu können.

Das Abstimmen des mit dem ersten Motorteil erzeugten magnetischen Drehfelds auf das statische Magnetfeld des zweiten Motorteils im Rahmen einer elektronischen Kommutierung erfordert jedoch die Kenntnis der räumlichen Lage von erstem und zweitem Motorteil zueinander. Dies ist insbesondere zu Beginn des Betriebs eines Synchronmotors von Bedeutung, um eine effektive Betriebsweise mit einer maximalen Drehmomentausnutzung zu ermöglichen. Infolgedessen werden Einrichtungen zur Positionserfassung eingesetzt, welche auch als Geber bzw. Gebersysteme bezeichnet werden. Diese können als sogenannte absolute Geber ausgebildet sein; um ein eindeutiges Bestimmen der Lage eines Motorteils zu ermöglichen. Von Nachteil ist jedoch, dass der Einsatz eines solchen absoluten Gebers mit relativ hohen Kosten verbunden ist.

Die DE 10 2004 012 805 A1 beschreibt ein Verfahren zum Bestimmen der Winkellage (Ausrichtung) eines mit Permanentmagneten versehenen Rotors eines Elektromotors. Bei dem Verfahren ist vorgesehen, Strompulse gemäß eines vorgegebenen Pulsmusters an Wicklungen (Elektromagneten) eines Stators des Elektromotors anzulegen, die dabei auftretende Winkelbeschleunigung des Rotors mit einem Beschleunigungssensor zu messen, und hierauf basierend die gesuchte Rotorlage zu berechnen.

Die EP 0 784 378 A2 bezieht sich auf ein Verfahren zum Bestimmen der absoluten Rotorlage einer Synchronmaschine. Hierbei wird mit Elektromagneten eines Stators ein Magnetfeld erzeugt, die dabei auftretende Drehbewegung eines permanenterregten Rotors erfasst, und im Rahmen eines Regelungsverfahrens die Ausrichtung des Statormagnetfelds geändert bzw. gedreht, bis die Drehbewegung des Rotors zum Erliegen kommt. In diesem Zustand sind die Ausrichtungen bzw. Winkellagen der Magnetfelder von Rotor und Stator deckungsgleich, wodurch die gesuchte Rotorlage bekannt ist.

Aus R. Schönfeld, W. Hofmann, "Elektrische Antriebe und Bewegungssteuerungen", S. 309 - 310, VDE-Verlag, 2005, sind Verfahren zur Anfangswinkel-Lageerkennung von Elektromotoren bekannt. Gemäß eines Verfahrens ist das Anlegen eines Magnetfelds vorgesehen, um einen permanenterregten Rotor hieran auszurichten.

Die DE 44 07 390 A1 bezieht sich auf ein Verfahren für die Anlaufphase und die Kommutierung bei Synchronmaschinen. Bei dem Verfahren ist vorgesehen, eine Testanregung eines Rotors vorzunehmen, indem verschiedenphasige Ströme an Wicklungen eines Stators angelegt werden. Ferner wird das dabei auftretende maximal erreichte Drehmoment bestimmt. Die dem maximalen Drehmoment zugehörige Phase der Statorströme wird als Kommutierungswinkel für den Anfangsbetrieb der Synchronmaschine zugrunde gelegt.

Die US 5,537,020 A beschreibt ein Verfahren zum Starten einer Synchronmaschine mit einem Stator und einem permanenterregten Rotor, wobei der Rotor in Bezug auf den Stator eine Anfangsposition besitzt. Bei dem Verfahren werden, im Anschluss an eine Initialisierungsphase, aufeinanderfolgende Vektorsummen von Strömen an Wicklungen des Stators angelegt. Dabei besitzt jede der Vektorsummen eine Phase. Für jede der angelegten Vektorsummen werden die Bewegung und die Bewegungsrichtung des Rotors erfasst. Die erfasste Bewegung und Bewegungsrichtung des Rotors wird dazu verwendet, um jeweils die Phase einer Vektorsumme, welche einer vorhergehenden Vektorsumme nachfolgt, zu kompensieren, und dadurch den Rotor in seine Anfangsposition zurückzustellen. Anhand der Phase der letzten angelegten Vektorsumme wird die Synchronmaschine in Betrieb gesetzt.

Die DE 196 37 161 A1 bezieht sich auf ein Verfahren zum Steuern eines bürstenlosen Elektromotors. In einer Orientierungsphase werden Spulenpaare eines Stators nacheinander impulsartig bestromt, so dass sich ein zugehöriger Rotor mit jedem Stromimpuls aus einer Anfangsposition ein kurzes Stück drehen kann. Bei jedem Stromimpuls werden der zurückgelegte Drehwinkel und die Drehrichtung des Rotors gemessen, und wird der Rotor anschließend wieder in seine Anfangsposition zurückgefahren. Durch Auswertung der jeweiligen Drehbewegung des Rotors wird eines der Spulenpaare zum Starten des Elektromotors ausgewählt.

Die US 4,814,677 A beschreibt ein Verfahren zum Betreiben eines Elektromotors, bei dem in einer Anfangsphase ein vorgegebenes Magnetfeld mit einem Stator erzeugt wird, um einen dazugehörigen Rotor hieran auszurichten und in eine vorgegebene Anfangsposition zu drehen. Hieran anschließend wird mit dem Stator ein Drehfeld zum Hervorrufen einer Drehbewegung des Rotors erzeugt.

Die EP 0 517 393 A2 bezieht sich auf ein Verfahren zum Starten eines Elektromotors, bei welchem Spulenwicklungen eines Stators mit einem elektrischen Strom beaufschlagt werden, und jeweils die Stromanstiegszeit in den Spulenwicklungen gemessen wird. Die Stromanstiegszeit ist abhängig von der Ausrichtung der einzelnen Spulen in Bezug auf das Magnetfeld eines permanenterregten Rotors des Elektromotors, wodurch diejenige Spule, mit welcher das größte Anfangsdrehmoment zur Bewegung des Rotors erzeugbar ist, bestimmt werden kann. Hieran anschließend wird der Rotor mit Hilfe eines kurzen Stromimpulses ein kurzes Stück gedreht. Nachfolgend wird eine weitere Stromanstiegszeit-Messung durchgeführt, wobei die Messergebnisse mit den Messergebnissen der vorhergehenden Stromanstiegszeit-Messung verglichen werden. Hierauf basierend wird die Drehrichtung der zuvor hervorgerufenen Drehung des Rotors bestimmt.

Die Aufgabe der vorliegenden Erfindung besteht darin, ein verbessertes Verfahren zum Betreiben eines Synchronmotors anzugeben, mit dessen Hilfe ein erstes und ein zweites Motorteil eines Synchronmotors bzw. deren Magnetfelder im Rahmen eines Betriebsbeginns des Synchronmotors auf relativ einfache Weise aufeinander abgestimmt werden können. Es ist ferner Aufgabe der Erfindung, einen verbesserten Verstärker zum Betreiben eines Synchronmotors sowie ein System mit einem solchen Verstärker und einem Synchronmotor bereitzustellen.

Diese Aufgabe wird durch ein Verfahren gemäß Anspruch 1, einen Verstärker gemäß Anspruch 9 und ein System gemäß Anspruch 15 gelöst. Weitere vorteilhafte Ausführungsformen der Erfindung sind in den abhängigen Ansprüchen angegeben.

Erfindungsgemäß wird ein Verfahren zum Betreiben eines Synchronmotors vorgeschlagen, wobei der Synchronmotor ein erstes Motorteil und ein zweites Motorteil aufweist, welche relativ zueinander bewegbar sind. Mit Hilfe des ersten Motorteils ist ein Magnetfeld erzeugbar. Das zweite Motorteil weist ein in Bezug auf das zweite Motorteil statisches Magnetfeld auf. Das erste und zweite Motorteil werden bei einem Unterschied in der Ausrichtung zwischen den Magnetfeldern des ersten und zweiten Motorteils relativ zueinander bewegt. Bei dem Verfahren wird in einem Verfahrensschritt a) ein Magnetfeld mit dem ersten Motorteil in einer vorgegebenen Ausrichtung erzeugt, um eine auf einen vorgegebenen Betrag begrenzte Relativbewegung zwischen dem ersten und zweiten Motorteil hervorzurufen. In einem Verfahrensschritt b) wird eine Bewegungsrichtung der begrenzten Relativbewegung zwischen dem ersten und zweiten Motorteil ermittelt. Die Verfahrensschritte a) und b) werden bis zu einer Änderung der Bewegungsrichtung der begrenzten Relativbewegung zwischen dem ersten und zweiten Motorteil wiederholt. Hierbei wird jeweils in Verfahrensschritt a) mit dem ersten Motorteil ein Magnetfeld mit einer gegenüber dem vorhergehend erzeugten Magnetfeld geänderten Ausrichtung erzeugt, wobei die Ausrichtung des Magnetfelds jeweils um einen vorgegebenen Ausrichtungsabschnitt und in Abhängigkeit der ermittelten Bewegungsrichtung geändert wird.

Das erfindungsgemäße Verfahren ist sowohl auf rotatorische als auch auf lineare Synchronmotoren anwendbar. Mit Hilfe des Verfahrens kann das Magnetfeld des ersten Motorteils schrittweise in Richtung des Magnetfelds des zweiten Motorteils ausgerichtet werden. Die dabei aufgrund der Wechselwirkung der Magnetfelder jeweils hervorgerufene Relativbewegung zwischen dem ersten und zweiten Motorteil ist auf einen vorgegebenen Betrag begrenzt, so dass das Durchführen des Verfahrens lediglich eine relativ geringe Gesamtbewegung eines Motorteils erfordert. Zum Ermitteln der Bewegungsrichtung bei einer Relativbewegung von erstem und zweitem Motorteil kann ein relativ einfacher Geber, insbesondere ein inkrementeller Geber, eingesetzt werden, wodurch sich die Durchführung des Verfahrens kostengünstig gestaltet.

Sobald sich die Bewegungsrichtung der Relativbewegung zwischen dem ersten und zweiten Motorteil umkehrt, wird erzielt, dass bei der nun vorliegenden räumlichen Lage des ersten und zweiten Motorteils ein Unterschied in der Ausrichtung zwischen dem Magnetfeld des zweiten Motorteils und dem zuletzt mit Hilfe des ersten Motorteils erzeugten Magnetfeld kleiner ist als ein Unterschied der Ausrichtungen zwischen den beiden letzten mit Hilfe des ersten Motorteils erzeugten Magnetfeldern. Anders ausgedrückt, die Ausrichtung des Magnetfelds des zweiten Motorteils ist "zwischen" den Ausrichtungen der beiden letzten mit dem ersten Motorteil erzeugten Magnetfeldern. Die Magnetfelder des ersten und zweiten Motorteils können auf diese Weise "grob" aufeinander abgestimmt werden.

In einer möglichen Ausführungsform ist das erste Motorteil ortsfest, und das zweite Motorteil ist in Bezug auf das erste Motorteil bewegbar. Diese Ausführungsform kommt insbesondere bei einem rotatorischen Synchronmotor in Betracht, bei dem das erste Motorteil als Stator und das zweite Motorteil als Rotor ausgebildet ist. Hierbei wird die Ausrichtung des mit dem ersten Motorteil erzeugten Magnetfelds in einer Richtung jeweils entgegengesetzt zu der ermittelten Bewegungsrichtung (Bewegung des zweiten Motorteils) geändert.

In einer alternativen Ausführungsform ist das zweite Motorteil ortsfest, und das erste Motorteil ist in Bezug auf das zweite Motorteil bewegbar. Diese Ausführungsform kommt insbesondere bei einem linearen Synchronmotor in Betracht, bei dem das erste Motorteil als verschiebbares Primärteil und das zweite Motorteil als feststehendes Sekundärteil ausgebildet ist. Hierbei wird die Ausrichtung des mit dem ersten Motorteil erzeugten Magnetfelds in einer Richtung jeweils entsprechend der ermittelten Bewegungsrichtung (Bewegung des ersten Motorteils) geändert.

Nach dem "groben" Abstimmen der Magnetfelder des ersten und zweiten Motorteils können die Magnetfelder ferner "fein" aufeinander abgestimmt bzw. gleichgerichtet werden. Ausgehend von diesem Zustand kann der Synchronmotor in seinen eigentlichen Betriebszustand versetzt werden, um eine Dreh- oder Translationsbewegung auszuführen. Zur Feinabstimmung der Magnetfelder kommen unterschiedliche Ausführungsformen in Betracht.

In einer bevorzugten Ausführungsform wird im Anschluss an das Wiederholen der Verfahrensschritte a) und b) und dem Ermitteln der Änderung bzw. Umkehr der Bewegungsrichtung mit dem ersten Motorteil ein weiteres Magnetfeld erzeugt, wobei die Ausrichtung des weiteren Magnetfelds in der Mitte der Ausrichtungen der beiden zuletzt mit dem ersten Motorteil erzeugten Magnetfelder gewählt und die Stärke des weiteren Magnetfelds ausgehend von Null bis zu einem vorgegebenen Wert erhöht wird. Dieses Vorgehen bietet die Möglichkeit, die Magnetfelder des ersten und zweiten Motorteils auf relativ einfache Weise gleichzurichten. Die dabei auftretende Relativbewegung des ersten und zweiten Motorteils entspricht maximal der Hälfte des Abstands (Translationsbewegung) bzw. Winkelbereichs (Rotationsbewegung) zwischen den Ausrichtungen der zuletzt mit dem ersten Motorteil erzeugten Magnetfelder. Hierbei tritt kein "Aufschaukeln" zwischen dem ersten und zweiten Motorteil auf, wodurch das Verfahren robust ist und sich insbesondere für Synchronmotoren mit einer geringen Dämpfung bzw. Haftreibung eignet. Hierunter fallen beispielsweise luftgelagerte eisenlose Linearantriebe. Auch bei einem Synchronmotor mit einer relativ großen Dämpfung kann sich dieses Vorgehen als vorteilhaft erweisen.

In einer alternativen Ausführungsform wird im Anschluss an das Wiederholen der Verfahrensschritte a) und b) und dem Ermitteln der Änderung der Bewegungsrichtung mit dem ersten Motorteil ausgehend von der letzten Ausrichtung ein weiteres Magnetfeld erzeugt und die Relativbewegung zwischen dem ersten und zweiten Motorteil erfasst, wobei die Stärke des weiteren Magnetfelds ausgehend von Null bis zu einem vorgegebenen Wert erhöht und die Ausrichtung des weiteren Magnetfelds derart geändert wird, bis die Relativbewegung zwischen dem ersten und zweiten Motorteil zum Erliegen kommt bzw. nur noch eine minimale Relativbewegung vorliegt. Durch diese Vorgehensweise wird ein Gleichrichten der Magnetfelder des ersten und zweiten Motorteils mit einer relativ kleinen Relativbewegung ermöglicht.

In einer weiteren bevorzugten Ausführungsform umfasst der Verfahrensschritt a) ein Erhöhen der Stärke des Magnetfelds ausgehend von Null. Des Weiteren wird die in Verfahrensschritt a) hervorgerufene Relativbewegung zwischen dem ersten und zweiten Motorteil nach Durchlaufen des vorgegebenen Betrags der Relativbewegung vorzugsweise durch Abschalten des mit dem ersten Motorteil erzeugten Magnetfelds beendet.

In einer weiteren bevorzugten Ausführungsform wird für den Fall, dass bei einem ersten Erzeugen eines Magnetfelds mit dem ersten Motorteil in der vorgegebenen Ausrichtung in Verfahrensschritt a) keine Relativbewegung zwischen dem ersten und zweiten Motorteil hervorgerufen wird, eine andere Ausrichtung vorgegeben, und der Verfahrensschritt a) wird mit der anderen Ausrichtung erneut durchgeführt. Dieser Fall einer Nichtbewegung tritt beispielsweise bei einem rotatorischen Synchronmotor auf, sofern das Magnetfeld des ersten Motorteils mit einer Ausrichtung erzeugt wird, welche um einen Winkel von 180° versetzt zu der Ausrichtung des Magnetfelds des zweiten Motorteils ist. Möglich ist es auch, dass das Magnetfeld des ersten Motorteils in der gleichen Orientierung wie das Magnetfeld des zweiten Motorteils erzeugt wird. Da diese beiden Fälle nicht voneinander unterschieden werden können, wird das Erzeugen des Magnetfelds des ersten Motorteils mit einer anderen Ausrichtung vorgeschlagen. Bei einem rotatorischen Synchronmotor kann die andere Ausrichtung beispielsweise um einen Winkel von 90° gedreht zu der vorherigen Ausrichtung gewählt werden.

Erfindungsgemäß wird des Weiteren ein Verstärker zum Betreiben eines Synchronmotors vorgeschlagen. Der Synchronmotor weist ein erstes Motorteil, ein zweites Motorteil und einen Geber auf. Mit Hilfe des ersten Motorteils ist ein Magnetfeld erzeugbar. Das zweite Motorteil weist ein in Bezug auf das zweite Motorteil statisches Magnetfeld auf. Bei einem Unterschied in der Ausrichtung zwischen den Magnetfeldern des ersten und zweiten Motorteils erfolgt eine Relativbewegung zwischen dem ersten und zweiten Motorteil, welche mit Hilfe des Gebers erfassbar ist. Der erfindungsgemäße Verstärker weist eine Leistungseinrichtung und eine Steuereinrichtung auf. Die Leistungseinrichtung ist ausgebildet, dem ersten Motorteil einen elektrischen Strom zum Erzeugen eines Magnetfelds in unterschiedlichen Ausrichtungen zuzuführen. Die Steuerereinrichtung des Verstärkers ist ausgebildet, die Leistungseinrichtung zu steuern und die mit dem Geber erfasste Relativbewegung auszuwerten. Die Steuereinrichtung ist weiter ausgebildet, im Rahmen eines Beginns des Betreibens des Synchronmotors in einem Verfahrensschritt a) das Erzeugen eines Magnetfelds mit dem ersten Motorteil in einer vorgegebenen Ausrichtung zu veranlassen, um eine auf einen vorgegebenen Betrag begrenzte Relativbewegung zwischen dem ersten und zweiten Motorteil hervorzurufen, in einem Verfahrensschritt b) mit dem Geber eine Bewegungsrichtung der begrenzten Relativbewegung zwischen dem ersten und zweiten Motorteil zu ermitteln, und die beiden Verfahrensschritte a) und b) bis zu einer Änderung der Bewegungsrichtung der begrenzten Relativbewegung zwischen dem ersten und zweiten Motorteil zu wiederholen. Hierbei veranlasst die Steuereinrichtung jeweils in Verfahrensschritt a), dass das Magnetfeld mit dem ersten Motorteil mit einer gegenüber dem vorhergehend erzeugten Magnetfeld geänderten Ausrichtung erzeugt wird, wobei die Ausrichtung des Magnetfelds jeweils um einen vorgegebenen Ausrichtungsabschnitt und in Abhängigkeit der mit dem Geber ermittelten Bewegungsrichtung geändert wird.

Der erfindungsgemäße Verstärker kann sowohl zum Betreiben eines rotatorischen als auch eines linearen Synchronmotors eingesetzt werden. Entsprechend dem oben beschriebenen Verfahren bietet der Verstärker die Möglichkeit, die Magnetfelder des ersten und zweiten Motorteils bei einer relativ geringen Gesamtbewegung eines Motorteils "grob" aufeinander abzustimmen. Im Anschluss hieran können die Magnetfelder mit dem Verstärker gleichgerichtet werden. Die gleichen Vorteile bietet ein erfindungsgemäßes System, welches einen derartigen Verstärker und einen Synchronmotor umfasst.

Die Erfindung wird im Folgenden anhand der Figuren näher erläutert. Es zeigen:
Figur 1 eine schematische Darstellung eines Systems mit einem rotatorischen Synchronmotor und einem Servoverstärker;
Figur 2 eine schematische Darstellung des Synchronmotors von Figur 1 mit drei Polpaaren;
Figur 3 eine schematische Darstellung des Synchronmotors von Figur 1 mit einem Polpaar;
Figuren 4A bis 4C den Synchronmotor von Figur 3 bei einer Betriebsweise zum groben Abstimmen von Magnetfeldern des Synchronmotors;
Figur 5 ein beispielhaftes Diagramm einer Rotorbewegung und einer Sollwertvorgabe eines magnetischen Flussvektors bei der Grobabstimmung des Synchronmotors;
Figur 6 den Synchronmotor von Figur 3 bei einer Betriebsweise zum feinen Abstimmen von Magnetfeldern;
Figur 7 den Synchronmotor von Figur 3 bei einer weiteren Betriebsweise zum feinen Abstimmen von Magnetfeldern; und
Figuren 8A bis 8C eine schematische Darstellung eines linearen Synchronmotors bei einer Betriebsweise zum groben Abstimmen von Magnetfeldern.

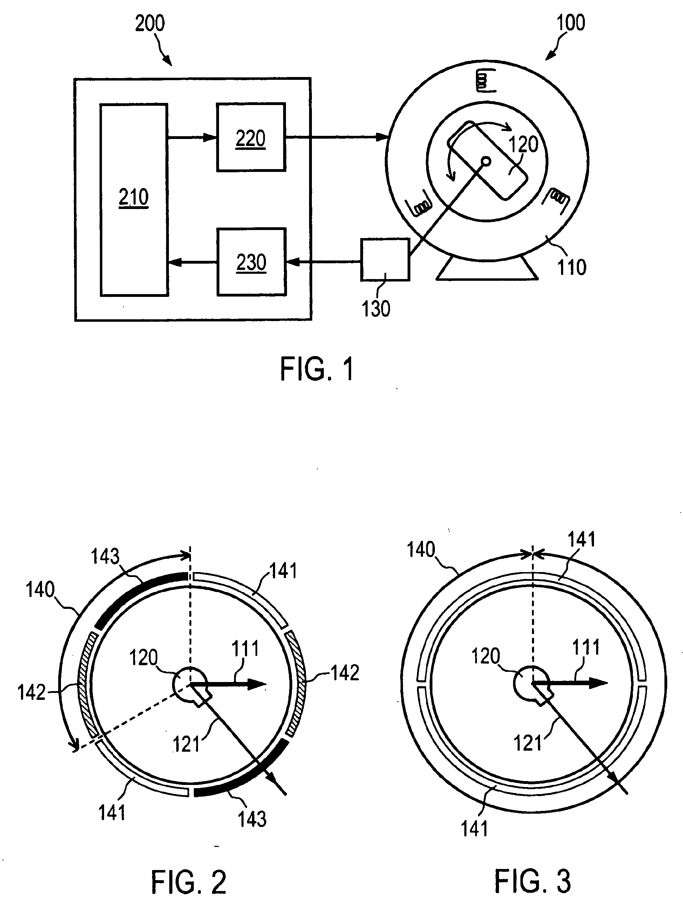

Figur 1 zeigt in einer schematischen Darstellung ein System umfassend einen rotatorischen Synchronmotor 100 und einen mit dem Synchronmotor 100 verbundenen Verstärker 200 zum Steuern bzw. Regeln des Synchronmotors 100. Der Synchronmotor 100, welcher auch als Servomotor bezeichnet wird, weist einen ortsfesten Stator 110 und einen innerhalb des Stators 110 rotierbar angeordneten Rotor 120 auf. Der Rotor 120 ist mit einem oder mehreren Permanentmagneten versehen und weist daher ein konstantes bzw. statisches Magnetfeld auf. Im Unterschied hierzu umfasst der Stator 110 eine Anzahl an Elektromagneten, welche in Figur 1 anhand von drei Spulen angedeutet sind. Durch zeitlich versetztes Ansteuern der Elektromagneten des Stators 110 besteht die Möglichkeit, ein magnetisches Drehfeld zu erzeugen, welches mit dem statischen Magnetfeld des Rotors 120 interagiert, wodurch der Rotor 120 in eine Drehbewegung versetzt wird.

Der Verstärker 200, auch als Servoverstärker bezeichnet, weist eine Steuereinrichtung 210, eine Leistungseinrichtung 220 und eine Positionserfassungseinrichtung (Drehzähler) 230 auf. Die Positionserfassungseinrichtung 230 kann (im Gegensatz zur Darstellung in Figur 1) auch als integrierte Komponente der Steuereinrichtung 210 ausgebildet sein. Über die Leistungseinrichtung 220 kann dem Stator 110 ein elektrischer Strom bzw. Drehstrom zum Erzeugen des magnetischen Drehfelds zugeführt werden. Hierbei werden die Elektromagneten des Stators 110 phasenversetzt zueinander mit einem Drehstrom beaufschlagt. Die Leistungseinrichtung 220 wird hierbei von der Steuereinrichtung 210 gesteuert.

Die Positionserfassungseinrichtung 230 dient dazu, die relative Positionsänderung des Rotors 120 zu ermitteln, und der Steuereinrichtung 210 zum Steuern der Leistungseinrichtung 220 zuzuführen. Zu diesem Zweck ist die Positionserfassungseinrichtung 230 des Verstärkers 200 mit einem inkrementellen Geber 130 verbunden, welcher dem Synchronmotor 100 zugeordnet ist. Der Geber 130 ist ausgebildet, bei einer Drehbewegung des Rotors 120 entsprechende Impulse bzw. Signale an die Positionserfassungseinrichtung 230 zu übermitteln, anhand derer die Positionserfassungseinrichtung 230 die Drehrichtung und die Relativbewegung des Rotors 120 bestimmen kann. Der Geber 130 kann die Drehbewegung des Rotors 120 hierbei auf mechanische, optische oder elektromagnetische Art und Weise erfassen.

Figur 2 zeigt den Synchronmotor 100 bzw. die im Betrieb des Synchronmotors 100 auftretenden Magnetfelder des Stators 110 und des Rotors 120 in einer schematischen Darstellung. Das mit Hilfe des Stators 110 elektrisch erzeugte Magnetfeld ist über einen Zeiger bzw. Vektor 111 dargestellt, welcher im Folgenden als Ständerflussvektor 111 bezeichnet wird. Das Magnetfeld des Rotors 120 ist über einen Zeiger bzw. Vektor 121 dargestellt, welcher im Folgenden als Rotorflussvektor 121 bezeichnet wird. Bei einer unterschiedlichen Ausrichtung der Magnetfelder von Stator 110 und Rotor 120, d.h. einer unterschiedlichen Orientierung des Ständerflussvektors 111 und des Rotorflussvektors 121, wird der Rotorflussvektor 121 und damit der Rotor 120 in Richtung des Ständerflussvektors 111 gedreht. Ein (kontinuierliches) Drehen des Ständerflussvektors 111 im Betrieb des Synchronmotors 100 führt daher zu einer Drehbewegung des Rotors 120.

In Figur 2 ist eine sechspolige Ausführungsform des Synchronmotors 100 angedeutet. Hierbei weist der Stator 110 sechs magnetische Pole 141, 142, 143 zum Erzeugen des Ständerflussvektors 111 auf, welche jeweils zu Polpaaren zusammengefasst sind. Ein Poolpaar kann hierbei über jeweils drei Spulen (Spulentripel) bereitgestellt werden. Bei einer derartigen Ausführungsform mit der Polpaarzahl drei hat ein Durchlaufen eines an den Stator 110 angelegten Wechselstromes - auch als "elektrische" Drehung bezeichnet - eine "mechanische" Drehung des Ständerflussvektors 111 zur Folge, welche ein Drittel der elektrischen Drehung beträgt. Eine vollständige elektrische Umdrehung während einer Periode (360°) führt daher wie in Figur 2 dargestellt zu einer mechanischen Drehung 140 von 120°.

Für die folgenden Ausführungen wird der Synchronmotor 100 als Ausführungsform mit lediglich einem Polpaar 141 zugrunde gelegt, wie in Figur 3 schematisch dargestellt ist. In einem solchen Fall entspricht eine elektrische Umdrehung einer mechanischen Umdrehung 140 des Ständerflussvektors 111, wodurch sich die nachfolgenden Betrachtungen vereinfachen. Die folgenden Ausführungen können jedoch in entsprechender Weise auch auf den Synchronmotor 100 mit einer anderen Polpaarzahl, beispielsweise die in Figur 2 dargestellte sechspolige Ausführungsform, angewendet werden.

Bei dem in Figur 1 dargestellten System ist der dem Synchronmotor 100 zugeordnete Geber 130 als kostengünstiger Inkrementalgeber ausgebildet, mit dem sich zwar eine Drehbewegung des Rotors 120, nicht aber dessen absolute Position erfassen lässt. Bei einem Betriebsbeginn des Synchronmotors 100 ist daher die Lage des Rotors 120 und damit die Ausrichtung des statischen Magnetfelds bzw. des Rotorflussvektors 121 unbekannt. Ein Erzeugen eines sich drehenden Ständerflussvektors 111 durch Anlegen eines Drehstroms an den Stator 110 zum Initiieren einer Drehbewegung des Rotors 120 in einer solchen undefinierten Position hätte daher unter Umständen negative Effekte wie zum Beispiel einen Drehmomentverlust, eine ruckartige Rotorbewegung, einen nichtbeherrschbaren Regelungsprozess, eine Beschädigung des Synchronmotors 100 oder mit dem Synchronmotor 100 gekoppelter Vorrichtungen, usw. zur Folge. Um derartige Beeinträchtigungen zu vermeiden, ist vorgesehen, die Magnetfelder von Stator 110 und Rotor 120 in einer ersten Phase grob aufeinander abzustimmen, wobei die Grobabstimmung mit einer relativ geringen Gesamtbewegung des Rotors 120 durchgeführt wird. In einer zweiten Phase kann eine Feinabstimmung erfolgen, und ausgehend von diesem Zustand kann der Synchronmotor 100 in seinen eigentlichen Betriebszustand versetzt werden, in welchem der Rotor 120 eine (kontinuierliche) Drehbewegung durchführt.

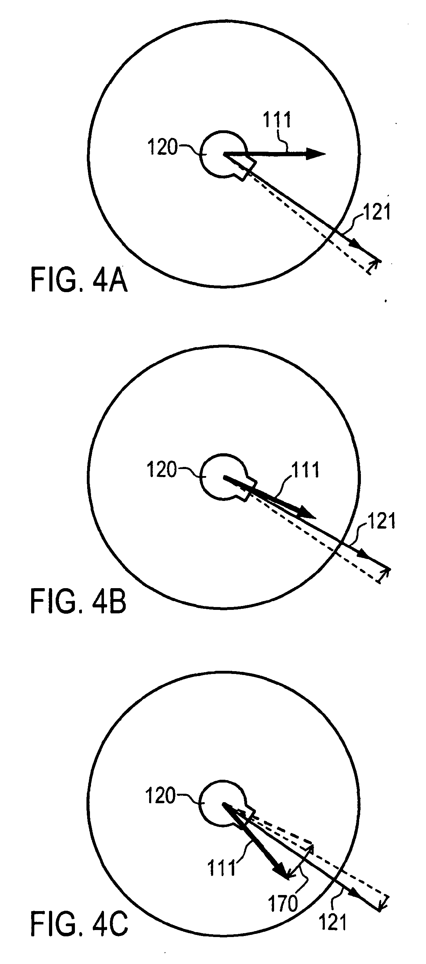

Die Figuren 4A bis 4C veranschaulichen das grobe Abstimmen der Magnetfelder bzw. Vektoren 111, 121 von Stator 110 und Rotor 120. Hierbei veranlasst die Steuereinrichtung 210 die Leistungseinrichtung 220, den Ständerflussvektor 111 in einer ersten Ausrichtung "aufzuziehen", d.h. die Stärke des betreffenden Magnetfelds in dieser Ausrichtung ausgehend von Null bis auf einen vorgegebenen Wert zu erhöhen (Figur 4A). Die erste Ausrichtung kann beispielsweise beliebig von der Steuereinrichtung 210 gewählt oder auch vorgegeben sein.

In der Regel ist die erste Ausrichtung des Ständerflussvektors 111 wie in Figur 4A dargestellt eine andere als diejenige des Rotorflussvektors 121, so dass der Rotorflussvektor 121 und damit der Rotor 120 durch die steigende magnetische Kraft in Richtung des Ständerflussvektors 111 gezogen wird. Die Drehbewegung des Rotors 120 wird von dem Geber 130 und der Positionserfassungseinrichtung 230 erfasst, und die dabei ermittelte Drehrichtung der Steuereinrichtung 210 zugeführt.

Die stattfindende Drehbewegung des Rotors 120 wird hierbei auf einen minimalen Winkelbetrag (beispielsweise 0,5°) begrenzt, welcher ausreicht, um mit Hilfe des Gebers 130 und der Positionserfassungseinrichtung 230 eine Drehrichtung der Rotorbewegung zu ermitteln. Dies kann beispielsweise dadurch durchgeführt werden, dass die Steuereinrichtung 210 die Leistungseinrichtung 220 veranlasst, den Ständerflussvektor 111 unmittelbar nach Erhalt der Drehrichtung des Rotors 120 abzuschalten.

Nachfolgend veranlasst die Steuereinrichtung 210 die Leistungseinrichtung 220, den Ständerflussvektor 111 wie in Figur 4B dargestellt erneut aufzuziehen, jedoch in einer gegenüber der ersten Ausrichtung um einen vorgegebenen Winkelversatz 170 (siehe Figur 4C) geänderten Ausrichtung. Der Winkelversatz 170 beträgt beispielsweise 22,5°. Die (neue) Ausrichtung des Ständerflussvektors 111 ist hierbei in Abhängigkeit der zuvor ermittelten Drehrichtung des Rotors 120 geändert, um den Ständerflussvektor 111 näher an den Rotorflussvektor 121 zu orientieren. Da im vorliegenden Fall der Stator 110, mit dem der Ständerflussvektor 111 erzeugt wird, ortsfest ist, und der Rotor 120 mit dem Rotorflussvektor 121 rotierbar ist, wird die Ausrichtung des Ständerflussvektors 111 in einer, Richtung entgegen gesetzt zu der zuvor ermittelten Drehrichtung des Rotors 120 geändert.

Auch beim erneuten Aufziehen des Ständerflussvektors 111 gemäß Figur 4B wird wiederum die Drehrichtung der auf einen minimalen Winkelbetrag begrenzten Drehbewegung des Rotors 120 mit dem Geber 130 und der Positionserfassungseinrichtung 230 ermittelt, und der Steuereinrichtung 210 zugeführt. Die Drehrichtung ist vorliegend dieselbe wie bei dem zuvor in der Ausrichtung gemäß Figur 4A erzeugten Ständerflussvektor 111.

Der Verstärker 200 bzw. die Steuereinrichtung 210 sind ausgebildet, diese Verfahrensschritte des Erzeugens eines Ständerflussvektors 111 (mit einer jeweils um den Winkelversatz 170 geänderten Ausrichtung) und des Ermittelns einer Drehrichtung der begrenzten Drehbewegung des Rotors 120 solange sukzessiv zu wiederholen, bis der Ständerflussvektor 111 den Rotorflussvektor 121 "überholt", und sich infolgedessen die Drehrichtung des Rotors 120 wie in Figur 4C dargestellt umkehrt. Bei der beispielhaften Abfolge der Figuren 4A bis 4C ist dieser Zustand ausgehend von der "Anfangssituation" in Figur 4A bereits bei der dritten Ausrichtung des Ständerflussvektors 111 gegeben. In diesem Zustand sind der Ständerflussvektor 111 und der Rotorflussvektor 121 (bzw. deren Ausrichtungen, da der Ständerflussvektor 111 nach Durchlaufen der begrenzten Drehbewegung des Rotors 120 abgeschaltet wird) grob aufeinander abgestimmt. Der Rotorflussvektor 121 befindet sich hierbei innerhalb des Winkelsektors bzw. -versatzes 170, welcher von den beiden zuletzt aufgezogenen Ständerflussvektoren 111 vorgegeben wird.

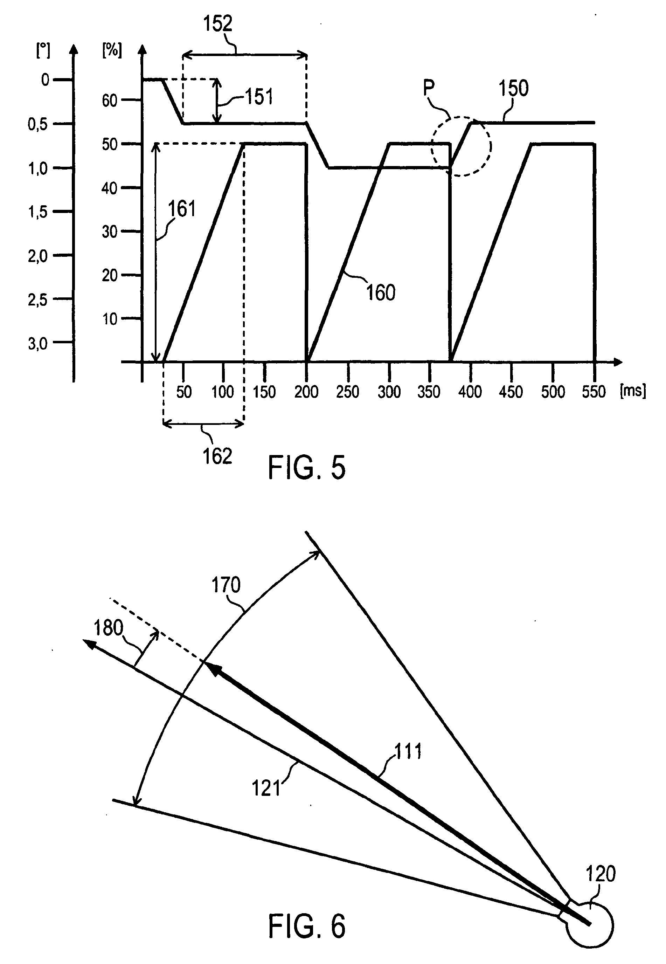

Zur weiteren Verdeutlichung des anhand der Figuren 4A bis 4C erläuterten Grobabstimmens zeigt Figur 5 ein beispielhaftes Diagramm, in welchem die Drehbewegung des Rotors 120, dargestellt über die Linie 150, und eine in der Steuereinrichtung 210 generierte Sollwertvorgabe für die Stärke des Ständerflussvektors 111, dargestellt über die Linie 160, über die Zeit (in ms) veranschaulicht ist. Gemäß der Sollwertvorgabe 160 wird der Ständerflussvektor 111 bei jeder gewählten Ausrichtung von Null ausgehend in einer Zeitdauer 162 linear auf einen Vorgabewert 161 aufgezogen, und nachfolgend auf diesem Vorgabewert 161 gehalten. Die Zeitdauer 162 beträgt beispielsweise 100ms, und der Vorgabewert 161 ist beispielsweise 50% einer vorgegebenen Maximalstärke des Ständerflussvektors 111.

Durch das Aufziehen des Ständerflussvektors 111 führt der Rotor 120 eine entsprechende Drehbewegung 150 aus. Wie vorstehend beschrieben, wird die Drehbewegung 150 des Rotors 120 beispielsweise auf einen Drehwinkel 151 von 0,5° begrenzt, was durch ein durch die Steuereinrichtung 210 veranlasstes Abschalten des Ständerflussvektors 111 durchgeführt wird. Die Sollwertvorgabe 160 kann hierbei wie in Figur 5 dargestellt in der Steuereinrichtung 210 jedoch weiterlaufen.

Im Anschluss an das Durchlaufen des Drehwinkels 151 bzw. der durch das Durchlaufen des Drehwinkels 151 ermöglichten Bewegungserkennung wird eine Zeitdauer 152 (beispielsweise 150ms) abgewartet, bis der Ständerflussvektor 111 erneut mit einer anderen Ausrichtung aufgezogen wird und sich der Rotor 120 erneut um den begrenzten Drehwinkel 151 dreht. Das Abwarten der Zeitdauer 152 wird beispielsweise veranschlagt, damit sich das eventuell aufgrund der Drehbewegung schwingende System bzw. der Synchronmotor 100 wieder beruhigen kann. Dieser Vorgang des sukzessiven Aufziehens des Ständerflussvektors 111 und Erfassens der jeweils um den Drehwinkel 151 stattfindenden Rotorbewegung wird solange wiederholt, bis sich die Drehrichtung des Rotors 120 umkehrt (vergl. den durch einen gestrichelten Kreis veranschaulichten Bereich P in Figur 5).

In Figur 5 ist die Rotorbewegung 150 beim Durchlaufen der Drehwinkel 151 jeweils mit einer gleichbleibenden Steigung dargestellt. Im realen Betrieb kann sich die Steigung von Drehwinkel 151 zu Drehwinkel 151 jedoch ändern bzw. kleiner werden, da die Stärke der anziehenden Wechselwirkung zwischen Ständerflussvektor 111 und Rotorflussvektor 121 mit zunehmender "Annäherung" der Vektoren 111, 121 kleiner wird. Auf diese Weise kann sich die Bewegung des Rotors 120 bei Durchlaufen des Drehwinkels 151 auch weiter in eine "Stufe" der Sollwertvorgabe 160 hineinerstrecken, als dies in Figur 5 dargestellt ist.

Im Anschluss an das grobe Abstimmen der Magnetfelder von Stator 110 und Rotor 120 bzw. der zugehörigen Vektoren 111, 121 können die Magnetfelder ferner fein aufeinander abgestimmt bzw, gleichgerichtet werden, d.h. in die gleiche Phase gebracht werden. Ausgehend von diesem Zustand kann der Synchronmotor 100 in seinen eigentlichen Betriebszustand versetzt werden, um durch Drehen eines Ständerflussvektors 111 (Drehfeld) eine Drehbewegung des Rotors 120 hervorzurufen. Zur Feinabstimmung kommen unterschiedliche Ausführungsformen in Betracht.

Eine mögliche Vorgehensweise zur Feinabstimmung ist schematisch in Figur 6 dargestellt. Bei diesem Verfahren veranlasst die Steuereinrichtung 210 die Leistungseinrichtung 220 zum erneuten Erzeugen bzw. Aufziehen des Ständerflussvektors 111, dessen Ausrichtung in der Mitte der Ausrichtungen der beiden zuletzt erzeugten Ständerflussvektoren 111 gewählt wird. Die Stärke des Ständerflussvektors 111 wird bei dieser (gleichbleibenden) Ausrichtung wiederum ausgehend von Null bis auf einen vorgegebenen Wert erhöht. Dies hat zur Folge, dass der Rotor 120 aufgrund der steigenden magnetischen Kraft zwischen dem Rotorflussvektor 121 und dem Ständerflussvektor 111 in Richtung des Ständerflussvektors 111 gezogen wird, bis die beiden Vektoren 111, 121 deckungsgleich sind. Die dabei auftretende Drehbewegung 180 des Rotors 120 entspricht maximal der Hälfte des bei der Grobabstimmung verwendeten Winkelversatzes 170.

Durch dieses "harte" Ausrichten des Rotors 120 auf den Ständerflussvektor 111 kann ein Aufschaukeln einer Drehbewegung des Rotors 120 vermieden werden. Infolgedessen eignet sich dieses robuste Verfahren für Synchronmotoren 100, bei denen eine geringe Dämpfung bzw. Haftreibung des Rotors 120 vorliegt. Das Verfahren ist jedoch nicht auf Synchronmotoren 100 mit einer solchen Eigenschaft beschränkt, sondern kann sich beispielsweise auch bei Vorliegen einer relativ großen Haftreibung als vorteilhaft erweisen.

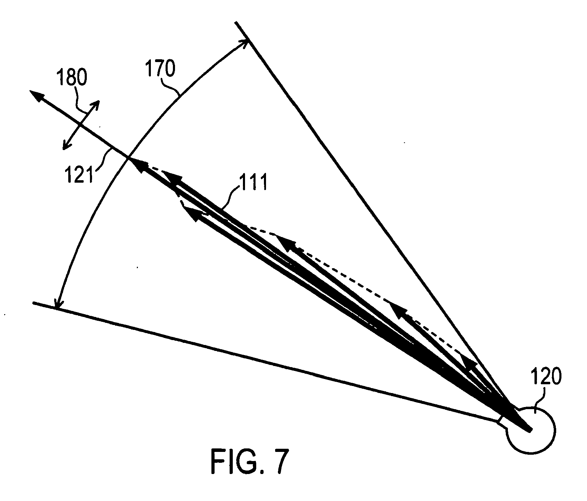

Ein alternatives, durch die Steuereinrichtung 210 geregeltes Verfahren zur Feinabstimmung ist schematisch in Figur 7 dargestellt. Hierbei wird der Ständerflussvektor 111 ausgehend von der in der Grobabstimmung zuletzt gewählten Ausrichtung erzeugt sowie die Drehbewegung des Rotors 120 kontinuierlich erfasst. Der Ständerflussvektor 111 wird erneut ausgehend von Null bis zu einem vorgegebenen Betrag aufgezogen, und die Ausrichtung des Ständerflussvektors 111 wird entsprechend der erfassten Rotorbewegung derart angepasst, bis die Drehbewegung des Rotors 120 zum Erliegen kommt. Hierbei kann sich der Rotor 120 in der gleichen Position wie am Anfang der Feinabstimmung befinden.

Durch dieses "Ausregeln" wird ein Gleichrichten der Vektoren 111, 121 mit einer relativ kleinen Drehbewegung 180 des Rotors 120 ermöglicht. Dies setzt jedoch voraus, dass der Rotor 120 keiner zu kleinen und auch keiner zu großen Haftreibung unterliegt, um ein Aufschaukeln oder ein ruckartiges Bewegen des Rotors 180 (bei Überwinden der Haftreibung) zu vermeiden. Das Aufziehen des Ständerflussvektors 111 auf den vorgegebenen Betrag kann hierbei während einer Zeitdauer von beispielsweise 500ms erfolgen. Der Ständerflussvektor 111 kann ferner auf dem vorgegebenen Betrag für eine vorgegebene Zeitdauer gehalten werden, welche beispielsweise 3000ms beträgt.

Das anhand der Figuren 4A bis 4C erläuterte Verfahren zur Grobabstimmung der Vektoren 111, 121 basiert darauf, dass bei einem Aufziehen des Ständerflussvektors 111 der Rotor 120 eine Drehbewegung ausführt. Bei einem ersten Aufziehen des Ständerflussvektors 111 kann es jedoch vorkommen, dass keine Drehbewegung des Rotors 120 erfolgt. Dies ist beispielsweise der Fall, wenn der Ständerflussvektor 111 in einer Ausrichtung entgegengesetzt bzw. antiparallel zu dem Rotorflussvektor 121, d.h. in einer um 180° gedrehten Ausrichtung erzeugt wird. Eine Nichtbewegung des Rotors 120 tritt allerdings auch dann auf, wenn der Ständerflussvektor 111 in der gleichen Ausrichtung, d.h. deckungsgleich mit dem Rotorflussvektor 121 aufgezogen wird. Die beiden unterschiedlichen Situationen können daher nicht voneinander unterschieden werden. Für den Fall einer Nichtbewegung des Rotors 120 bei einem ersten Aufziehen des Ständerflussvektors 111 ist der Verstärker 200 bzw. die Steuereinrichtung 210 daher ausgebildet, das Erzeugen des Ständerflussvektors 111 mit einer anderen Ausrichtung erneut zu veranlassen, sowie die Grobabstimmung wie oben beschrieben fortzusetzen. Die andere Ausrichtung kann beispielsweise um einen Winkel von 90° gedreht zu der vorherigen Ausrichtung gewählt werden.

Für den Fall, dass auch bei dieser anderen Ausrichtung keine Drehbewegung erfolgt, kann der Verstärker 200 bzw. die Steuereinrichtung 210 ausgebildet sein, eine Fehlermeldung zu generieren, welche beispielsweise optisch bzw. akustisch ausgegeben wird. Dieser Fall kann beispielsweise dann auftreten, wenn eine Motorbremse (noch) aktiv ist oder andere die Drehbewegung verhindernde Umstände vorliegen.

Des weiteren kann es gegebenenfalls am Ende der Grobabstimmung der Vektoren 111, 121 vorkommen, dass der Rotor 120 beim Aufziehen des Ständerflussvektors 111 anstelle einer Drehung (mit umgekehrter Drehrichtung) keine Drehbewegung durchführt. Dieser Fall tritt auf, wenn der Rotorflussvektor 121 nicht wie in Figur 4C dargestellt von dem Ständerflussvektor 111 "überholt", sondern der Ständerflussvektor 111 deckungsgleich zu dem Rotorflussvektor 121 erzeugt wird. Für diesen Fall kann die Steuereinrichtung 210 ausgebildet sein, die Grobabstimmung zu beenden, und keine Feinabstimmung mehr zu veranlassen, da die Vektoren 111, 121 bereits gleichgerichtet sind.

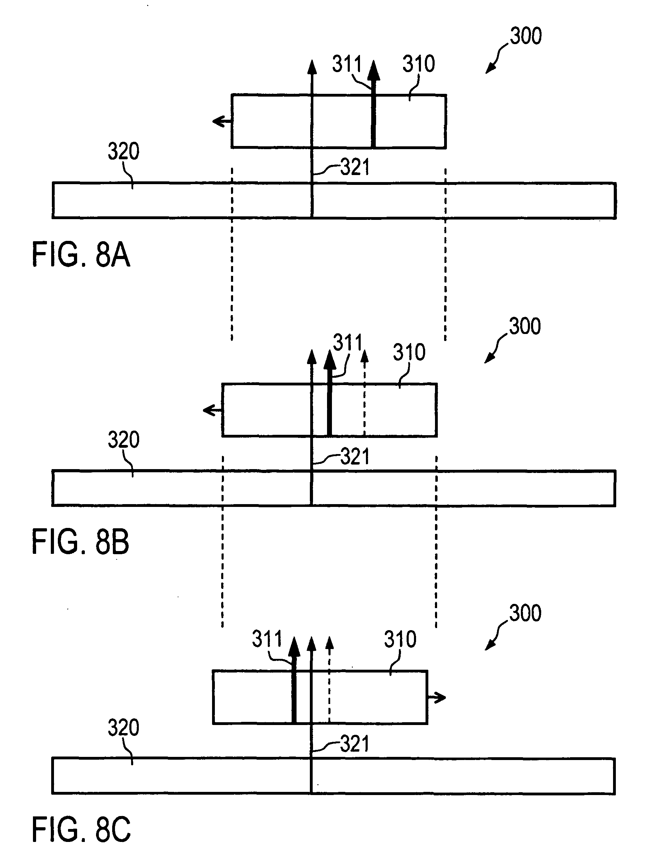

Das anhand der vorstehenden Figuren erläuterte Verfahren der Grob- und Feinabstimmung ist nicht nur auf rotatorische Synchronmotoren beschränkt, sondern kann in entsprechender Weise auch auf lineare Synchronmotoren angewendet werden, bei welchen ein Motorteil in Bezug auf das andere Motorteil translatorisch versetzt werden kann. Zur Veranschaulichung zeigen die Figuren 8A bis 8C in einer schematischen Darstellung das Verfahren der Grobabstimmung bei einem solchen Linearmotor 300.

Der Linearmotor 300 weist ein ortsfestes Motorteil 320, im Folgenden als Sekundärteil 320 bezeichnet, auf, welches ein statisches Magnetfeld bereitstellt. Das Magnetfeld des Sekundärteils 320 kann beispielsweise durch eine NebeneinanderAnordnung gleich beabstandeter Permanentmagnete wechselnder Polarität hergestellt werden (nicht dargestellt). Neben dem Sekundärteil 320 weist der Linearmotor 300 ein auf dem Sekundärteil 320 verschiebbar gelagertes Motorteil 310 auf, welches im Folgenden als Primärteil 310 bezeichnet wird. Das Primärteil 310, auch als Läufer bezeichnet, weist mehrere Elektromagneten auf (nicht dargestellt), welche durch Anlegen eines elektrischen Stromes ein Magnetfeld erzeugen. Durch phasenversetztes Ansteuern der Elektromagneten des Primärteils 310 mit einem Wechselstrom kann ein sich translatorisch bewegendes Magnetfeld, auch als Wanderfeld bezeichnet, erzeugt werden. Das Wanderfeld des Primärteils 310 interagiert hierbei mit dem statischen Magnetfeld des Sekundärteils 320, wodurch eine Translationsbewegung des Primärteils 310 hervorgerufen wird.

Zur Veranschaulichung des Magnetfelds des Sekundärteils 320 bzw. dessen Ausrichtung ist in den Figuren 8A bis 8C ein einzelner magnetischer Flussvektor 321 dargestellt, welcher im Folgenden als Statorflussvektor 321 bezeichnet wird. Streng genommen veranschaulicht der Statorflussvektor 321 nur das Feld von zwei Permanentmagneten unterschiedlicher Polarität, d.h. von einem Polpaar, so dass sich die folgenden Ausführungen auf dieses eine Polpaar beziehen. Das Magnetfeld des Primärteils 310 ist durch einen Flussvektor 311 dargestellt, im Folgenden als Läuferflussvektor 311 bezeichnet, dessen Ausrichtung "horizontal" verschoben bzw. geändert werden kann.

Die Steuerung des Linearmotors 300 kann analog zu dem System von Figur 1 mit Hilfe eines entsprechenden Verstärkers 200 und eines dem Linearmotor 300 zugeordneten inkrementeller Gebers 130 durchgeführt werden (nicht dargestellt), wobei der Geber 130 in diesem Fall zum Erfassen einer Translationsbewegung des Primärteils 310 ausgebildet ist. Zu weiteren Details im Hinblick auf diese Komponenten wird auf die vorstehenden Ausführungen Bezug genommen, welche analog anwendbar sind. Die Stromversorgung des Primärteils 310 kann hierbei über ein Schleppkabel erfolgen.

Auch bei dem Linearantrieb 300 kann aufgrund des Einsatzes des kostengünstigen Inkrementalgebers 130 das Problem bestehen, dass die absolute Lage des Primärteils 310 in Bezug auf das Sekundärteil 320 unbekannt ist. Ein Erzeugen eines wandernden Läuferflussvektors 311 durch Anlegen eines Drehstroms an das Primärteil 310 zum Initiieren einer Translationsbewegung hätte daher unter Umständen negative Effekte wie zum Beispiel ein verringertes Antriebsmoment, ein ruckartiges Anfahren des Primärteils 310, einen nicht beherrschbaren Regelungsprozess, eine Beschädigung des Linearantriebs 300, usw. zur Folge. In entsprechender Weise wird daher vorgeschlagen, die Magnetfelder von Primärteil 310 und Sekundärteil 320 in einer ersten Phase (Figuren 8A bis 8C) grob aufeinander abzustimmen, wobei die Grobabstimmung mit einer relativ geringen Gesamtbewegung des Primärteils 310 durchgeführt wird. In einer zweiten Phase erfolgt eine Feinabstimmung, und ausgehend von diesem Zustand kann der Linearmotor 300 zum Durchführen einer Translationsbewegung des Primärteils 310 angesteuert werden.

Wie in Figur 8A dargestellt, wird der Läuferflussvektor 311 in einer ersten Ausrichtung aufgezogen, wobei die Stärke des Läuferflussvektors 311 wiederum ausgehend von Null auf einen vorgegebenen Wert erhöht wird. Die erste Ausrichtung kann beispielsweise beliebig gewählt werden oder auch vorgegeben sein. Üblicherweise ist die erste Ausrichtung des Läuferflussvektors 311 eine andere als diejenige des Statorflussvektors 321. Aufgrund der steigenden magnetischen Kraft wird der Läuferflussvektor 311 und damit das Primärteil 310 daher in Richtung des Statorflussvektors 321 gezogen.

Diese stattfindende Translationsbewegung wird (mit dem Geber 130) erfasst, um die Bewegungsrichtung des Primärteils 310 zu ermitteln. Die stattfindende Translationsbewegung des Primärteils 310 wird hierbei wiederum auf einen minimalen Betrag begrenzt, welcher ausreicht, um die Bewegungsrichtung ermitteln zu können. Zu diesem Zweck kann der Läuferflussvektor 311 unmittelbar nach Feststellen der Bewegungsrichtung abgeschaltet werden.

In einem weiteren Schritt wird der Läuferflussvektor 311 in einer gegenüber der ersten Ausrichtung um einen vorgegebenen "Abstand" bzw. "Abschnitt" geänderten Ausrichtung aufgezogen, wie in Figur 8B dargestellt ist. Zur besseren Veranschaulichung ist in Figur 8B zusätzlich die Lage des zuvor in der ersten Ausrichtung erzeugten Läuferflussvektors 311 durch einen gestrichelten Pfeil angedeutet. Die (neue) Ausrichtung des Läuferflussvektors 311 ist hierbei in Abhängigkeit der zuvor ermittelten Bewegungsrichtung des Primärteils 310 geändert, um den Läuferflussvektor 311 näher an den Statorflussvektor 321 zu orientieren. Da im vorliegenden Fall das Primärteil 310, mit dem der Läuferflussvektor 311 erzeugt wird, bewegbar ist, und das Sekundärteil 320 mit dem statischen Flussvektor 321 ortsfest ist, wird die Ausrichtung des Läuferflussvektors 311 (im Unterschied zu dem Synchronmotor 100 von Figur 1) in einer Richtung entsprechend der zuvor ermittelten Bewegungsrichtung des Primärteils 310 geändert.

Auch beim erneuten Aufziehen des Läuferflussvektors 311 gemäß Figur 8B wird die Bewegungsrichtung der auf einen minimalen Betrag begrenzten Bewegung des Primärteils 310 ermittelt. Die Bewegungsrichtung ist vorliegend dieselbe wie bei dem zuvor in der Ausrichtung gemäß Figur 8A erzeugten Läuferflussvektor 311.

Diese Verfahrensschritte des Erzeugens des Läuferflussvektors 311 (mit einer jeweils um den vorgegebenen Abschnitt geänderten Ausrichtung) und des Ermittelns einer Bewegungsrichtung des Primärteils 310 können solange wiederholt werden, bis der Läuferflussvektor 311 den Statorflussvektor 321 wie in Figur 8C dargestellt "überholt". Hierbei tritt eine Umkehr der Bewegungsrichtung des Primärteils 310 auf. Bei der beispielhaften Abfolge der Figuren 8A bis 8C liegt dieser Zustand ausgehend von der "Anfangssituation" in Figur 8A bereits bei der dritten Ausrichtung des Läuferflussvektors 311 vor. In diesem Zustand sind der Läuferflussvektor 311 und der Statorflussvektor 321 (bzw. deren Ausrichtungen) grob aufeinander abgestimmt, da der Statorflussvektor 321 sich nun innerhalb des Abschnitts befindet, welcher von den beiden zuletzt aufgezogenen Läuferflussvektoren 311 vorgegeben wird.

Nach dem groben Abstimmen der Magnetfelder des Primärteils 310 und des Sekundärteils 320 können die Magnetfelder ferner fein aufeinander abgestimmt bzw. gleichgerichtet werden. Hierfür kommen wie bei dem rotatorischen Synchronmotor 100 zwei unterschiedliche Ausführungsformen in Betracht (nicht dargestellt).

Eine Vorgehensweise besteht darin, den Läuferflussvektor 311 erneut mit einer Ausrichtung aufzuziehen, welche in die Mitte der Ausrichtungen der beiden zuletzt erzeugten Läuferflussvektoren 311 gelegt wird. Die Stärke des Läuferflussvektors 311 wird wiederum ausgehend von Null bis auf einen vorgegebenen Wert erhöht, so dass das Primärteil 310 aufgrund der steigenden magnetischen Kraft in Richtung des Statorflussvektor 321 gezogen wird, bis die beiden Vektoren 311, 321 deckungsgleich sind. Die dabei stattfindende Translationsbewegung des Primärteils 310 entspricht maximal der Hälfte des bei der Grobabstimmung verwendeten Ausrichtungsabschnitts, um welchen die Ausrichtung des Läuferflussvektor 311 jeweils geändert wird. Dieses Verfahren kommt insbesondere bei einem Linearmotor 300 mit einer geringen Haftreibung, beispielsweise einem luftgelagerten eisenlosen Linearantrieb, in Betracht.

Alternativ können der Läuferflussvektor 311 ausgehend von der in der Grobabstimmung zuletzt gewählten Ausrichtung erneut erzeugt sowie die Translationsbewegung des Primärteils 310 kontinuierlich erfasst werden. Der Läuferflussvektor 311 wird hierbei erneut ausgehend von Null bis zu einem vorgegebenen Betrag aufgezogen, und die Ausrichtung des Läuferflussvektors 311 wird entsprechend der Translationsbewegung des Primärteils 310 derart ausgeregelt bzw. angepasst, bis sich das Primärteil 310 nicht mehr bewegt. Hierbei kann sich das Primärteil 310 in der gleichen Position wie am Anfang der Feinabstimmung befinden. Durch das Ausregeln können die Vektoren 311, 321 mit einer relativ kleinen Translationsbewegung des Primärteils 310 zur Deckung gebracht werden.

Auch im Rahmen der Grobabstimmung des Linearmotors 300 kann es vorkommen, dass das Primärteil 310 bei einem Aufziehen des Läuferflussvektors 311 keine Translationsbewegung (mehr) ausführt. Für den Fall einer Nichtbewegung bei einem ersten Aufziehen des Läuferflussvektors 311 wird wie bei dem Synchronmotor 100 vorgeschlagen, den Läuferflussvektor 311 mit einer anderen Ausrichtung zu erzeugen, sowie die Grobabstimmung (gegebenenfalls) fortzusetzen. Für den Fall, dass auch bei dieser anderen Ausrichtung keine Translationsbewegung erfolgt, kann (mit dem Verstärker 200) eine Fehlermeldung generiert werden, welche beispielsweise optisch bzw. akustisch ausgegeben wird. Dieser Fall kann beispielsweise dann auftreten, wenn eine Motorbremse (noch) aktiv ist oder andere die Bewegung des Primärteils 310 verhindernde Umstände vorliegen.

Falls eine Nichtbewegung des Primärteils 310 bei einem Erzeugen des Läuferflussvektor 311 auftritt, wobei bei vorherigem Aufziehen des Läuferflussvektors 311 (mit anderen Ausrichtungen) das Primärteil 310 jeweils bewegt wurde, kann die Grobabstimmung beendet werden, und keine Feinabstimmung mehr veranlasst werden, da die Vektoren 311, 321 in diesem Fall bereits gleichgerichtet sind.

Die anhand der Figuren erläuterten Ausführungsformen stellen bevorzugte bzw. beispielhafte Ausführungsformen der Erfindung dar. Darüber hinaus sind Ausführungsformen vorstellbar, welche weitere Abwandlungen oder Kombinationen der beschriebenen Ausführungsformen darstellen.

Insbesondere lässt sich das Verfahren der Grob- und Feinabstimmung anstelle auf den in Figur 1 dargestellten Synchronmotor 100, welcher eine sogenannte Innenpolmaschine darstellt, auch auf eine sogenannte Außenpolmaschine anwenden, bei der der Rotor zum Erzeugen eines magnetischen Drehfelds ausgebildet ist und der Stator ein magnetisches Gleichfeld bereitstellt. Dies trifft in entsprechender Weise auch auf einen Linearantrieb zu, bei welchem im Unterschied zu dem Linearantrieb 300 der Figuren 8A bis 8C das zum Erzeugen des magnetischen Wanderfelds eingesetzte Primärteil ortsfest und das zum Bereitstellen des statischen Magnetfelds eingesetzte Sekundärteil verschiebbar ausgebildet ist.

## Patentansprüche

1. Verfahren zum Betreiben eines Synchronmotors (100, 300), wobei der Synchronmotor (100, 300) ein erstes Motorteil (110, 310) und ein zweites Motorteil (120, 320) aufweist, welche relativ zueinander bewegbar sind,
wobei mit Hilfe des ersten Motorteils (110, 310) ein Magnetfeld (111, 311) erzeugbar ist,
wobei das zweite Motorteil (120, 320) ein in Bezug auf das zweite Motorteil (120, 320) statisches Magnetfeld (121, 321) aufweist,
wobei bei einem Unterschied in der Ausrichtung zwischen den Magnetfeldern (111, 121, 311, 321) des ersten und zweiten Motorteils (110, 120, 310, 320) das erste und zweite Motorteil (110, 120, 310, 320) relativ zueinander bewegt werden,
und wobei das Magnetfeld (111, 311) des ersten Motorteils (110, 310) schrittweise in Richtung des Magnetfelds (121, 321) des zweiten Motorteils (120, 320) durch Durchführen der folgenden Verfahrensschritte ausgerichtet wird:
a) Erzeugen eines Magnetfelds (111, 311) mit dem ersten Motorteil (110, 310) in einer vorgegebenen Ausrichtung, um eine auf einen vorgegebenen Betrag (151) begrenzte Relativbewegung zwischen dem ersten und zweiten Motorteil (110, 120, 310, 320) hervorzurufen;
b) Ermitteln einer Bewegungsrichtung der begrenzten Relativbewegung zwischen dem ersten und zweiten Motorteil (110, 120, 310, 320); und
c) Wiederholen der Verfahrensschritte a) und b) bis zu einer Änderung der Bewegungsrichtung der begrenzten Relativbewegung zwischen dem ersten und zweiten Motorteil (110, 120, 310, 320),
wobei bei dem Wiederholen der Verfahrensschritte a) und b) jeweils in Verfahrensschritt a) mit dem ersten Motorteil (110, 310) ein Magnetfeld (111, 311) mit einer gegenüber dem vorhergehend erzeugten Magnetfeld (111, 311) geänderten Ausrichtung erzeugt wird, wobei die Ausrichtung des Magnetfelds (111, 311) jeweils um einen vorgegebenen Ausrichtungsabschnitt (170) und in Abhängigkeit der ermittelten Bewegungsrichtung geändert wird.

2. Verfahren nach Anspruch 1, wobei das erste Motorteil (110) ortsfest und das zweite Motorteil (120) in Bezug auf das erste Motorteil (110) bewegbar ist, und wobei die Ausrichtung des mit dem ersten Motorteil (110) erzeugten Magnetfelds (111) in einer Richtung jeweils entgegengesetzt zu der ermittelten Bewegungsrichtung geändert wird.

3. Verfahren nach Anspruch 1, wobei das zweite Motorteil (320) ortsfest und das erste Motorteil (310) in Bezug auf das zweite Motorteil (320) bewegbar ist, und wobei die Ausrichtung des mit dem ersten Motorteil (310) erzeugten Magnetfelds (311) in einer Richtung jeweils entsprechend der ermittelten Bewegungsrichtung geändert wird.

4. Verfahren nach einem der Ansprüche 1 bis 3, wobei nach dem Verfahrensschritt c) mit dem ersten Motorteil (110, 310) ein weiteres Magnetfeld (111, 311) erzeugt wird, wobei die Ausrichtung des weiteren Magnetfelds (111, 311) in der Mitte der Ausrichtungen der beiden zuletzt mit dem ersten Motorteil (110, 310) erzeugten Magnetfelder (111, 311) gewählt und die Stärke des weiteren Magnetfelds (111, 311) ausgehend von Null bis zu einem vorgegebenen Wert erhöht wird.

5. Verfahren nach einem der Ansprüche 1 bis 3, wobei nach dem Verfahrensschritt c) mit dem ersten Motorteil (110, 310) ausgehend von der letzten Ausrichtung ein weiteres Magnetfeld (111, 311) erzeugt und die Relativbewegung zwischen dem ersten und zweiten Motorteil (110, 120, 310, 320) erfasst wird, wobei die Stärke des weiteren Magnetfelds (111, 311) ausgehend von Null bis zu einem vorgegebenen Wert erhöht und die Ausrichtung des weiteren Magnetfelds (111, 311) derart geändert wird, bis die Relativbewegung zwischen dem ersten und zweiten Motorteil (110, 120, 310, 320) zum Erliegen kommt.

6. Verfahren nach einem der vorhergehenden Ansprüche, wobei der Verfahrensschritt a) ein Erhöhen der Stärke des Magnetfelds (111, 311) ausgehend von Null umfasst.

7. Verfahren nach einem der vorhergehenden Ansprüche, wobei die in Verfahrensschritt a) hervorgerufene Relativbewegung zwischen dem ersten und zweiten Motorteil (110, 120, 310, 320) nach Durchlaufen des vorgegebenen Betrags (151) der Relativbewegung durch Abschalten des mit dem ersten Motorteil (110, 310) erzeugten Magnetfelds (111, 311) beendet wird.

8. Verfahren nach einem der vorhergehenden Ansprüche, wobei für den Fall, dass bei einem ersten Erzeugen eines Magnetfelds (111, 311) mit dem ersten Motorteil (110, 310) in der vorgegebenen Ausrichtung in Verfahrensschritt a) keine Relativbewegung zwischen dem ersten und zweiten Motorteil (110, 120, 310, 320) hervorgerufen wird, eine andere Ausrichtung vorgegeben wird, und Verfahrensschritt a) mit der anderen Ausrichtung erneut durchgeführt wird.

9. Verstärker zum Betreiben eines Synchronmotors (100, 300), wobei der Synchronmotor (100, 300) ein erstes Motorteil (110, 310), ein zweites Motorteil (120, 320) und einen Geber (130) aufweist,
wobei mit Hilfe des ersten Motorteils (110, 310) ein Magnetfeld (111, 311) erzeugbar ist,
wobei das zweite Motorteil (120, 320) ein in Bezug auf das zweite Motorteil (120, 320) statisches Magnetfeld (121, 321) aufweist,
wobei bei einem Unterschied in der Ausrichtung zwischen den Magnetfeldern (111, 121, 311, 321) des ersten und zweiten Motorteils (110, 120, 310, 320) eine Relativbewegung zwischen dem ersten und zweiten Motorteil (110, 120, 310, 320) erfolgt, welche mit Hilfe des Gebers (130) erfassbar ist,
wobei der Verstärker (200) eine Leistungseinrichtung (220) und eine Steuereinrichtung (210, 230) aufweist,
wobei die Leistungseinrichtung (220) ausgebildet ist, dem ersten Motorteil (110, 310) einen elektrischen Strom zum Erzeugen eines Magnetfelds (111, 311) in unterschiedlichen Ausrichtungen zuzuführen,
wobei die Steuerereinrichtung (210, 230) ausgebildet ist, die Leistungseinrichtung (220) zu steuern und die mit dem Geber (130) erfasste Relativbewegung auszuwerten,
wobei die Steuereinrichtung (210, 230) weiter ausgebildet ist, im Rahmen eines Beginns des Betreibens des Synchronmotors (100, 300) ein schrittweises Ausrichten des Magnetfelds (111, 311) des ersten Motorteils (110, 310) in Richtung des Magnetfelds (121, 321) des zweiten Motorteils (120, 320) zu veranlassen, indem die Steuereinrichtung (210, 230)
in einem Verfahrensschritt a) das Erzeugen eines Magnetfelds (111, 311) mit dem ersten Motorteil (110, 310) in
einer vorgegebenen Ausrichtung veranlasst, um eine auf einen vorgegebenen Betrag begrenzte Relativbewegung zwischen dem ersten und zweiten Motorteil (110, 120, 310, 320) hervorzurufen,
in einem Verfahrensschritt b) mit dem Geber (130) eine Bewegungsrichtung der begrenzten Relativbewegung zwischen dem ersten und zweiten Motorteil (110, 120, 310, 320) ermittelt,
und die beiden Verfahrensschritte a) und b) bis zu einer Änderung der Bewegungsrichtung der begrenzten Relativbewegung zwischen dem ersten und zweiten Motorteil (110, 120, 310, 320) wiederholt,
wobei die Steuereinrichtung (210, 230) bei dem Wiederholen der Verfahrensschritte a) und b) jeweils in Verfahrensschritt a) veranlasst, dass das Magnetfeld (111, 311) mit dem ersten Motorteil (110, 310) mit einer gegenüber dem vorhergehend erzeugten Magnetfeld (111, 311) geänderten Ausrichtung erzeugt wird, wobei die Ausrichtung des Magnetfelds (111, 311) jeweils um einen vorgegebenen Ausrichtungsabschnitt (170) und in Abhängigkeit der mit dem Geber (130) ermittelten Bewegungsrichtung geändert wird.

10. Verstärker nach Anspruch 9, wobei die Steuereinrichtung (210, 230) weiter ausgebildet ist, nach dem Wiederholen der Verfahrensschritte a) und b) das Erzeugen eines weiteren Magnetfelds (111, 311) mit dem ersten Motorteil (110, 310) zu veranlassen, dessen Ausrichtung in der Mitte der Ausrichtungen der beiden zuletzt mit dem ersten Motorteil (110, 310) erzeugten Magnetfelder (111, 311) gewählt und dessen Stärke ausgehend von Null bis zu einem vorgegebenen Wert erhöht wird.

11. Verstärker nach Anspruch 9, wobei die Steuereinrichtung (210, 230) weiter ausgebildet ist, nach dem Wiederholen der Verfahrensschritte a) und b) das Erzeugen eines weiteren Magnetfelds (111, 311) mit dem ersten Motorteil (110, 310) ausgehend von der letzten Ausrichtung zu veranlassen, dessen Stärke ausgehend von Null bis zu einem vorgegebenen Wert erhöht und dessen Ausrichtung derart geändert wird, bis die Relativbewegung zwischen dem ersten und zweiten Motorteil (110, 120, 310, 320) zum Erliegen kommt.

12. Verstärker nach einem der Ansprüche 9 bis 11, wobei die Steuereinrichtung (210, 230) ausgebildet ist, in dem Verfahrensschritt a) zu veranlassen, dass die Stärke des Magnetfelds (111, 311) ausgehend von Null erhöht wird.

13. Verstärker nach einem der Ansprüche 9 bis 12, wobei die Steuereinrichtung (210, 230) ausgebildet ist, ein Beenden des mit dem ersten Motorteil (110, 310) in Verfahrensschritt a) erzeugten Magnetfelds (111, 311) zu veranlassen, sofern die mit dem Geber (130) ermittelte Relativbewegung zwischen dem ersten und zweiten Motorteil (110, 120, 310, 320) den vorgegebenen Betrag durchlaufen hat.

14. Verstärker nach einem der Ansprüche 9 bis 13, wobei die Steuereinrichtung (210, 310) ausgebildet ist, für den Fall, dass bei einem ersten Erzeugen eines Magnetfelds (111, 311) mit dem ersten Motorteil (110, 310) in der vorgegebenen Ausrichtung in Verfahrensschritt a) keine Relativbewegung zwischen dem ersten und zweiten Motorteil (110, 120, 310, 320) hervorgerufen wird, das Erzeugen eines Magnetfelds (111, 311) mit dem ersten Motorteil (110, 310) in einer anderen Ausrichtung zu veranlassen, um Verfahrensschritt a) mit der anderen Ausrichtung erneut durchzuführen.

15. System umfassend einen Verstärker (200) nach einem der Ansprüche 9 bis 14 und einen Synchronmotor (100, 300).

## Claims

1. A method for operating a synchronous motor (100, 300), the synchronous motor (100, 300) comprising a first motor component (110, 310) and a second motor component (120, 320) which are movable relative to each other,
wherein the first motor component (110, 310) is configured to generate a magnetic field (111, 311),
wherein the second motor component (120, 320) comprises a magnetic field (121, 321) which is static with regard to the second motor component (120, 320),
wherein in the case of a difference in the orientation between the magnetic fields (111, 121, 311, 321) of the first and the second motor component (110, 120, 310, 320) the first and the second motor component (110, 120, 310, 320) are moved relatively to each other,
and wherein the magnetic field (111, 311) of the first motor component (110, 310) is gradually aligned in the direction of the magnetic field (121, 321) of the second motor component (120, 320) by carrying out the following method steps:
a) generating a magnetic field (111, 311) by means of the first motor component (110, 310) in a predetermined orientation in order to generate a relative movement between the first and the second motor component (110, 120, 310, 320), the relative movement being limited to a predetermined value (151);
b) determining a direction of movement of the limited relative movement between the first and the second motor component (110, 120, 310, 320); and
c) repeating method steps a) and b) until a change in the direction of movement of the limited relative movement between the first and the second motor component (110, 120, 310, 320) occurs,
wherein during repetition of the method steps a) and b) in each case in method step a) a magnetic field (111, 311) having a changed orientation with regard to the previously generated magnetic field (111, 311) is generated by means of the first motor component (110, 310), wherein the orientation of the magnetic field (111, 311) is respectively changed by a predetermined orientation section (170) and depending on the determined direction of movement.

2. The method according to claim 1, wherein the first motor component (110) is stationary and the second motor component (120) is movable with regard to the first motor component (110), and wherein the orientation of the magnetic field (111) generated by means of the first motor component (110) is in each case changed in a direction opposite to the determined direction of movement.

3. The method according to claim 1, wherein the second motor component (320) is stationary and the first motor component (310) is movable with regard to the second motor component (320), and wherein the orientation of the magnetic field (311) generated by means of the first motor component (310) is in each case changed in a direction which corresponds to the determined direction of movement.

4. The method according to any one of claims 1 to 3, wherein after method step c) a further magnetic field (111, 311) is generated by means of the first motor component (110, 310), wherein the orientation of the further magnetic field (111, 311) is chosen to be in the middle between the orientations of the two magnetic fields (111, 311) generated lastly by means of the first motor component (110, 310) and the strength of the further magnetic field (111, 311) is increased starting at zero up to a predetermined value.

5. The method according to any one of claims 1 to 3, wherein after method step c) a further magnetic field (111, 311) is generated by means of the first motor component (110, 310) starting from the last orientation and the relative movement between the first and the second motor component (110, 120, 310, 320) is determined, wherein the strength of the further magnetic field (111, 311) is increased starting from zero up to a predetermined value and the orientation of the further magnetic field (111, 311) is changed until the relative movement between the first and the second motor component (110, 120, 310, 320) comes to a halt.

6. The method according to any one of the preceding claims, wherein method step a) comprises increasing the strength of the magnetic field (111, 311) starting from zero.

7. The method according to any one of the preceding claims, wherein the relative movement between the first and the second motor component (110, 120, 310, 320) generated in method step a) is terminated after passing through the predetermined value (151) of the relative movement by switching off the magnetic field (111, 311) generated by means of the first motor component (110, 310).

8. The method according to any one of the preceding claims, wherein in the case that during a first generation of a magnetic field (111, 311) by means of the first motor component (110, 310) in the predetermined orientation no relative movement is generated between the first and the second motor component (110, 120, 310, 320) in method step a), a different orientation is predefined and method step a) is carried out again with the different orientation.

9. An amplifier for operating a synchronous motor (100, 300), the synchronous motor (100, 300) comprising a first motor component (110, 310), a second motor component (120, 320) and an encoder (130),
wherein the first motor component (110, 310) is configured to generate a magnetic field (111, 311),
wherein the second motor component (120, 320) comprises a magnetic field (121, 321) which is static with regard to the second motor component (120, 320),
wherein in the case of a difference in the orientation between the magnetic fields (111, 121, 311, 321) of the first and the second motor component (110, 120, 310, 320) a relative movement between the first and the second motor component (110, 120, 310, 320) occurs which is determinable by means of the encoder (130),
wherein the amplifier (200) comprises a power unit (220) and a control unit (210, 230),
wherein the power unit (220) is configured to provide an electric current to the first motor component (110, 310) for generating a magnetic field (111, 311) in different orientations,
wherein the control unit (210, 230) is configured to control the power unit (220) and to evaluate the relative movement determined by means of the encoder (130),
wherein the control unit (210, 320) is further configured to initiate a gradual alignment of the magnetic field (111, 311) of the first motor component (110, 310) in the direction of the magnetic field (121, 321) of the second motor component (120, 320) within the framework of starting the operation of the synchronous motor (100, 300), which is effected in that the control unit (210, 230)
initiates in a method step a) the generation of a magnetic field (111, 311) by means of the first motor component (110, 310) in a predetermined orientation in order to generate a relative movement between the first and the second motor component (110, 120, 310, 320) limited to a predetermined value,
determines in a method step b) a direction of movement of the limited relative movement between the first and the second motor component (110, 120, 310, 320) by means of the encoder (130),
and repeats the two method steps a) and b) until a change in the direction of movement of the limited relative movement between the first and the second motor component (110, 120, 310, 320) occurs,
wherein during repetition of the method steps a) and b) the control unit (210, 230) in each case initiates in method step a) that the magnetic field (111, 311) is generated by means of the first motor component (110, 310) having a changed orientation with regard to the previously generated magnetic field (111, 311), wherein the orientation of the magnetic field (111, 311) is respectively changed by a predetermined orientation section (170) and depending on the direction of movement determined by means of the encoder (130).

10. The amplifier according to claim 9, wherein the control unit (210, 230) is further configured, after repetition of method steps a) and b), to initiate the generation of a further magnetic field (111, 311) by means of the first motor component (110, 310), the orientation of the further magnetic field (111, 311) being chosen in the middle between the orientations of the two magnetic fields (111, 311) generated lastly by means of the first motor component (110, 310) and the strength of the further magnetic field (111, 311) being increased starting from zero up to a predetermined value.

11. The amplifier according to claim 9, wherein the control unit (210, 230) is further configured, after repetition of method steps a) and b), to initiate the generation of a further magnetic field (111, 311) by means of the first motor component (110, 310) starting from the last orientation, the strength of which being increased starting from zero up to a predetermined value and the orientation of which being changed until the relative movement between the first and the second motor component (110, 120, 310, 320) comes to a halt.

12. The amplifier according to any one of claims 9 to 11, wherein the control unit (210, 230) is configured to initiate in method step a) that the strength of the magnetic field (111, 311) is increased starting from zero.

13. The amplifier according to any one of claims 9 to 12, wherein the control unit (210, 230) is configured to initiate a termination of the magnetic field (111, 311) generated in method step a) by means of the first motor component (110, 310), provided that the relative movement between the first and the second motor component (110, 120, 310, 320) determined by means of the encoder (130) has passed through the predetermined value.

14. The amplifier according to any one of claims 9 to 13, wherein the control unit (210, 310) is configured, in the case that during a first generation of a magnetic field (111, 311) by means of the first motor component (110, 310) in the predetermined orientation no relative movement is generated between the first and the second motor component (110, 120, 310, 320) in method step a), to initiate the generation of a magnetic field (111, 311) by means of the first motor component (110, 310) in a different orientation in order to carry out method step a) again with the different orientation.

15. A system comprising an amplifier (200) according to any one of claims 9 to 14 and a synchronous motor (100, 300).

## Revendications

1. Procédé pour le fonctionnement d'un moteur synchrone (100, 300), dans lequel le moteur synchrone (100, 300) présente une première partie de moteur (110, 310) et une deuxième partie de moteur (120, 320), qui sont mobiles l'une par rapport à l'autre,
- dans lequel un champ magnétique (111, 311) peut être produit à l'aide de la première partie de moteur (110, 310),
- dans lequel la deuxième partie de moteur (120, 320) présente un champ magnétique (121, 321) statique par rapport à la deuxième partie de moteur (120, 320),
- dans lequel, en présence d'une différence dans l'orientation entre les champs magnétiques (111, 121, 311, 321) de la première et de la deuxième parties de moteur (110, 120, 310, 320), la première et la deuxième parties de moteur (110, 120, 310, 320) sont déplacées l'une par rapport à l'autre,
- et dans lequel le champ magnétique (111, 311) de la première partie de moteur (110, 310) est orienté progressivement dans la direction du champ magnétique (121, 321) de la deuxième partie de moteur (120, 320) en exécutant les étapes de procédé suivantes:
a) production d'un champ magnétique (111, 311) avec la première partie de moteur (110, 310) dans une orientation prédéterminée, afin de provoquer un mouvement relatif limité à une ampleur prédéterminée (151) entre la première et la deuxième parties de moteur (110, 120, 310, 320);
b) détermination d'une direction de mouvement du mouvement relatif limité entre la première et la deuxième parties de moteur (110, 120, 310, 320);
c) répétition des étapes de procédé a) et b) jusqu'à un changement de la direction de mouvement du mouvement relatif limité entre la première et la deuxième parties de moteur (110, 120, 310, 320),
- dans lequel, lors de la répétition des étapes de procédé a) et b), on produit, respectivement à l'étape de procédé a), avec la première partie de moteur (110, 310) un champ magnétique (111, 311) avec une orientation changée par rapport au champ magnétique produit temporairement (111, 311), l'orientation du champ magnétique (111, 311) étant chaque fois changée d'une quantité d'orientation prédéterminée (170) et en fonction de la direction de mouvement déterminée.

2. Procédé selon la revendication 1, dans lequel la première partie de moteur (110) est stationnaire et la deuxième partie de moteur (120) est mobile par rapport à la première partie de moteur (110), et dans lequel l'orientation du champ magnétique (111) produit avec la première partie de moteur (110) est changée dans une direction respectivement opposée à la direction de mouvement déterminée.

3. Procédé selon la revendication 1, dans lequel la deuxième partie de moteur (320) est stationnaire et la première partie de moteur (310) est mobile par rapport à la deuxième partie de moteur (320), et dans lequel l'orientation du champ magnétique (311) produit avec la première partie de moteur (310) est changée dans une direction respectivement opposée à la direction de mouvement déterminée.

4. Procédé selon l'une quelconque des revendications 1 à 3, dans lequel, après l'étape de procédé c), on produit avec la première partie de moteur (110, 310) un autre champ magnétique (111, 311), dans lequel on choisit l'orientation de l'autre champ magnétique (111, 311) au milieu des orientations des deux derniers champs magnétiques (111, 311) produits avec la première partie de moteur (110, 310) et on augmente l'intensité de l'autre champ magnétique (111, 311) à partir de zéro jusqu'à une valeur prédéterminée.

5. Procédé selon l'une quelconque des revendications 1 à 3, dans lequel, après l'étape de procédé c), on produit avec la première partie de moteur (110, 310) un autre champ magnétique (111, 311) à partir de la dernière orientation et on détecte le mouvement relatif entre la première et la deuxième parties de moteur (110, 120, 310, 320), dans lequel on augmente l'intensité de l'autre champ magnétique (111, 311) à partir de zéro jusqu'à une valeur prédéterminée et on change l'orientation de l'autre champ magnétique (111, 311) jusqu'à ce que le mouvement relatif entre la première et la deuxième parties de moteur (110, 120, 310, 320) soit bloqué.

6. Procédé selon l'une quelconque des revendications précédentes, dans lequel l'étape de procédé a) comprend une augmentation de l'intensité du champ magnétique (111, 311) à partir de zéro.

7. Procédé selon l'une quelconque des revendications précédentes, dans lequel le mouvement relatif entre la première et la deuxième parties de moteur (110, 120, 310, 320) provoqué dans l'étape de procédé a) est terminé, après avoir décrit l'ampleur prédéterminée (151) du mouvement relatif, par coupure du champ magnétique (111, 311) produit avec la première partie de moteur (110, 310).

8. Procédé selon l'une quelconque des revendications précédentes, dans lequel, dans le cas où aucun mouvement relatif entre la première et la deuxième parties de moteur (110, 120, 310, 320) n'est provoqué dans la direction prédéterminée, à l'étape de procédé a), lors de la première production d'un champ magnétique (111, 311) avec la première partie de moteur (110, 310), on prédétermine une autre orientation et on exécute de nouveau l'étape de procédé a) avec l'autre orientation.

9. Amplificateur pour le fonctionnement d'un moteur synchrone (100, 300), dans lequel le moteur synchrone (100, 300) présente une première partie de moteur (110, 310) et une deuxième partie de moteur (120, 320) et un capteur (130),
- dans lequel un champ magnétique (111, 311) peut être produit à l'aide de la première partie de moteur (110, 310),
- dans lequel la deuxième partie de moteur (120, 320) présente un champ magnétique (121, 321) statique par rapport à la deuxième partie de moteur (120, 320),
- dans lequel, en présence d'une différence dans l'orientation entre les champs magnétiques (111, 121, 311, 321) de la première et de la deuxième parties de moteur (110, 120, 310, 320), il se produit un mouvement relatif entre la première et la deuxième parties de moteur (110, 120, 310, 320), qui peut être détecté à l'aide du capteur (130),
- dans lequel l'amplificateur (200) présente un dispositif de puissance (220) et un dispositif de commande (210, 230),
- dans lequel le dispositif de puissance (220) est réalisé de façon à fournir à la première partie de moteur (110, 310) un courant électrique destiné à produire un champ magnétique (111, 311) dans différentes orientations,
- dans lequel le dispositif de commande (210, 230) est réalisé de façon à commander le dispositif de puissance (220) et à analyser le mouvement relatif détecté avec le capteur (130),
- dans lequel le dispositif de commande (210, 230) est en outre réalisé de façon à provoquer, dans le cadre d'un début de fonctionnement du moteur synchrone (100, 300), une orientation progressive du champ magnétique (111, 311) de la première partie de moteur (110, 310) dans la direction du champ magnétique (121, 321) de la deuxième partie de moteur (120, 320), du fait que le dispositif de commande (210, 230):
- dans une étape de procédé a), déclenche la production d'un champ magnétique (111, 311) avec la première partie de moteur (110, 310) dans une orientation prédéterminée, afin de provoquer un mouvement relatif, limité à une ampleur prédéterminée, entre la première et la deuxième parties de moteur (110, 120, 310, 320),
- dans une étape de procédé b), détermine avec le capteur (130) une direction de mouvement du mouvement relatif limité entre la première et la deuxième parties de moteur (110, 120, 310, 320),
- et répète les étapes de procédé a) et b) jusqu'à un changement de la direction de mouvement du mouvement relatif limité entre la première et la deuxième parties de moteur (110, 120, 310, 320),
- dans lequel le dispositif de commande (210, 230) déclenche, lors de la répétition des étapes de procédé a) et b), respectivement dans l'étape de procédé a), la production du champ magnétique (111, 311) avec la première partie de moteur (110, 310) avec une orientation changée par rapport au champ magnétique produit temporairement (111, 311), dans lequel l'orientation du champ magnétique (111, 311) est changée respectivement d'une quantité d'orientation prédéterminée (170) et en fonction de la direction de mouvement déterminée avec le capteur (130).

10. Amplificateur selon la revendication 9, dans lequel le dispositif de commande (210, 230) est en outre réalisé de façon à provoquer, après la répétition des étapes de procédé a) et b), la production d'un autre champ magnétique (111, 311) avec la première partie de moteur (110, 310), dont l'orientation est choisie au milieu des deux derniers champs magnétiques (111, 311) produits avec la première partie de moteur (110, 310) et dont l'intensité est changée à partir de zéro jusqu'à une valeur prédéterminée.

11. Amplificateur selon la revendication 9, dans lequel le dispositif de commande (210, 230) est en outre réalisé de façon à provoquer, après la répétition des étapes de procédé a) et b), la production d'un autre champ magnétique (111, 311) avec la première partie de moteur (110, 310) à partir de la dernière orientation, dont l'intensité est augmentée à partir de zéro jusqu'à une valeur prédéterminée et dont l'orientation est changée jusqu'à ce que le mouvement relatif entre la première et la deuxième parties de moteur (110, 120, 310, 320) soit bloqué.

12. Amplificateur selon l'une quelconque des revendications 9 à 11, dans lequel le dispositif de commande (210, 230) est réalisé de façon à provoquer, à l'étape de procédé a), l'augmentation de l'intensité du champ magnétique (111, 311) à partir de zéro.

13. Amplificateur selon l'une quelconque des revendications 9 à 12, dans lequel le dispositif de commande (210, 230) est réalisé de façon à provoquer la fin du champ magnétique (111, 311) produit à l'étape de procédé a) avec la première partie de moteur (110, 310), dans la mesure où le mouvement relatif entre la première et la deuxième parties de moteur (110, 120, 310, 320), détecté par le capteur (130) a décrit l'ampleur prédéterminée.

14. Amplificateur selon l'une quelconque des revendications 9 à 13, dans lequel le dispositif de commande (210, 310) est réalisé, dans le cas où aucun mouvement relatif entre la première et la deuxième parties de moteur (110, 12-0, 310, 320) n'est provoqué dans l'orientation prédéterminée, à l'étape de procédé a), lors de la première production d'un champ magnétique (111, 311) avec la première partie de moteur (110, 310), de façon à provoquer la production d'un champ magnétique (111, 311) avec la première partie de moteur (110, 310) dans une autre orientation, en vue d'exécuter de nouveau l'étape de procédé a) avec l'autre orientation.

15. Système comprenant un amplificateur (200) selon l'une quelconque des revendications 9 à 14 et un moteur synchrone (100, 300).
